# EUROPÄISCHE PATENTSCHRIFT

(11) **EP 1 512 875 B1**
(45) Veröffentlichungstag und Bekanntmachung des Hinweises auf die Patenterteilung: **31.05.2006**
(21) Anmeldenummer: 04020475.2
(22) Anmeldetag: 28.08.2004
(51) Int. Cl.: F16B 35/04

(54) **Verbundeinrichtung für eine Holz-Beton-Verbindung**
Connection device for a wood concrete connection
Dispositif de raccordement pour un raccordement concret et bois

(30) Priorität: 05.09.2003 DE 10341401
(43) Veröffentlichungstag der Anmeldung: 09.03.2005
(73) Patentinhaber: Wieland, Heinz, Dipl. Bauing., 7212 Seewis (CH)
(72) Erfinder: Wieland, Heinz, Dipl. Bauing., 7212 Seewis (CH)
(74) Vertreter: Sawodny, Michael-Wolfgang

(56) Entgegenhaltungen:
- EP-A- 0 219 556
- EP-A- 0 432 484
- EP-A- 0 984 177
- DE-A- 19 705 202
- "Zeichnung der Justierschraube der Firma EUROTEC, HAGEN" EUROTEC, BUCHSER, GENEVA,, CH, 2003, Seite 1, XP002968651 ISSN: 0014-3243

## Beschreibung

Die vorliegende Erfindung betrifft eine Verbundeinrichtung für eine Holz-Beton-Verbindung gemäß des Oberbegriffs von Anspruch 1 und 2, sowie ein Verfahren zum Herstellen und Rückbauen einer rückbaubaren Holz-Beton-Verbindung bei Verwendung einer solchen Verbundeinrichtung.

Holz-Beton-Verbundsysteme, in denen Holz und Beton durch Verbundeinrichtungen mechanisch miteinander verbunden sind, insbesondere auf der Basis spezieller geneigt eingedrehter Holzschrauben, sind bekannt. Beispielsweise wird auf die Offenlegungsschrift EP 0 984 177 A2 verwiesen, deren bekannte Merkmale im Oberbegriff des Anspruchs 1 zusammengefasst sind, und ferner auf die EP 0 432 484 A2.

Die dort gezeigten Verbundschrauben ermöglichen eine sichere Verankerung einer aufgebrachten Betonschicht auf einem Holztragwerk, beispielsweise bei der Sanierung von Gebäuden. Die dabei erzielte Verbindung weist jedoch den erheblichen Nachteil auf, dass sie nicht rückbaubar ist, ohne das Holz, insbesondere die Holzbalken, in welche die Schrauben eingeschraubt sind, nachhaltig zu schädigen.

Heutzutage verlangen jedoch verschiedene Bauherren, vor allem bei der Sanierung historischer Gebäude, dass die Ertüchtigung der Holz-Deckentragwerke rückbaubar ist. Auch im Neubau ist die Rückbaubarkeit heutzutage in zunehmendem Maß ein wichtiges Merkmal.

Im weitergehenden Sinne sind auch die genannten Systeme mit erheblichem Aufwand bedingt rückbaubar, was jedoch zwangsläufig zu der genannten nachhaltigen Schädigung des Holzes führt. Allerdings ist der Aufwand für einen solchen Rückbau derart hoch, dass er dem Sinn des Rückbaues, nämlich die Schonung der Ressourcen, nicht mehr gerecht wird.

Ein weiterer Nachteil der im Dokument EP 0 432 484 A2 beschriebenen Verbundeinrichtung ergibt sich im Herstellungsprozess der gezeigten Schraube. Das Ausgangsmaterial für Schrauben ist Draht. Zuerst wird auf einer Kaltfließpresse ein sogenannter Rohiing gepresst. Dabei wird vor allem der Kopf angestaucht und je nach endgültiger Form der Schraube auch verschiedene Schaftdurchmesser. In einem weiteren Arbeitsgang - oder in mehreren weiteren Arbeitsgängen - wird das Gewinde aufgerollt. Danach wird die Schraube gehärtet und die Oberflächenbeschichtung(en) ausgeführt. Da die im Dokument EP 0 432 484 A2 gezeigte Schraube einen Flansch im mittleren Bereich des Schaftes aufweist, welcher im wesentlichen denselben Außendurchmesser wie der Bund unter dem Schraubenkopf aufweist, muss auch dieser Schaft beim Herstellen des Rohlings durch extreme Verformung mittels Pressen hergestellt werden. Um diesen großflächigen Flansch in der Mitte des Schaftes überhaupt anpressen zu können, muss in der Regel eine Sechsstufen-Quertransportpresse verwendet werden. Eine solche Presse ist eine relativ langsame und komplizierte sowie kostenintensive Maschine, was schon die Herstellung des einzigen vorgeschlagenen Flansches in der Mitte des Schaftes teuer macht.

Auch bei der Herstellung der im Dokument EP 0 984 177 A2 vorgeschlagenen Schraube verursacht der Herstellungsprozess erhebliche Kosten. Dies wird dadurch bedingt, dass der sägezahnförmige Umfang des Schraubenschaftes aus einem Rohling gefertigt werden muss, dessen Verankerungsabschnitt einen größeren Durchmesser aufweist, als der Gewindeabschnitt. Dies bedeutet, dass mindestes zwei Walzgänge erforderlich sind, nämlich einer für die Herstellung des Gewindes und ein weiterer für die Herstellung des Verankerungsabschnittes. Es wäre wünschenswert, wenn sowohl der Verankerungsabschnitt als auch das Einschraubgewinde in einem einzigen Walzgang gewalzt werden könnten. Dabei sollte insbesondere die Form des Verankerungsabschnittes derart gewählt sein, dass sich eine gewünschte Materialbilanz ergibt, die Verformung des Rohlings keine übermäßigen Kräfte erfordert, und somit die Beanspruchung des Walzwerkzeugs gering ist, was zu einer längeren Lebensdauer desselben führt.

Das Dokument DE 100 39 264 A1 beschreibt die Verbindung von Holz und Leichtbeton. Dabei wird ein Blechteil verwendet, welches eine vergleichsweise höhere Schubsteifigkeit und hohe Schubbruchlasten ermöglicht. Aufgrund der Verwendung des Leichtbetons, welcher eine vergleichsweise geringe Steifigkeit aufweist, können Norm-Holzschrauben verwendet werden, da das schwächste Bauteil durch den Leichtbeton gebildet wird. Eine Verbundeinrichtung, wie sie die vorliegende Erfindung betrifft, ist jedoch insbesondere für eine Holz-Beton-Verbindung ausgebildet, die Beton mit einer Dichte von wenigstens 2000 kg/m³, insbesondere von wenigstens 2500 kg/m³, und somit Normalbeton oder Schwerbeton umfasst. In solchen Verbindung ist die Festigkeit der Schraube als kritische Größe anzusehen.

Der Erfindung liegt die Aufgabe zugrunde, eine Verbundeinrichtung für eine Holz-Beton-Verbindung, insbesondere für ein Holz-Beton-Tragwerk, anzugeben, welche die oben genannten Nachteile überwindet. Dabei soll die erfindungsgemäße Verbundeinrichtung insbesondere sowohl in rückbaubaren Holz-Beton-Verbindungen als auch in nicht rückbaubaren Holz-Beton-Verbindungen wirtschaftlich eingesetzt werden können und daher derart gestaltet sein, dass sie für einen Einsatz in nicht rückbaubaren Holz-Beton-Verbindungen, welche üblicherweise kostengünstiger hergestellt werden können, so kostengünstig hergestellt werden kann, dass sie mit herkömmlichen nicht rückbaubaren Verbundeinrichtungen konkurrieren kann.

Die erfindungsgemäße Aufgabe wird durch eine Verbundeinrichtung mit den Merkmalen des Anspruchs 1 oder 2, gelost. Die abhängigen Ansprüche beschreiben besonders vorteilhafte Weiterbildungen der Erfindung.

Ferner wird in den Ansprüchen 15 bis 17 ein erfindungsgemäßes Verfahren zum . Herstellen bzw. Rückbauen einer rückbaubaren Holz-Beton-Verbindung und vorteilhafte Weiterentwicklungen angegeben.

Die erfindungsgemäße Verbundeinrichtung weist eine Verbundschraube auf, welche mit den bekannten Verbundschrauben gemeinsam hat, dass sie einen Schraubenkopf und einen Schraubenschaft aufweist, wobei der Schraubenschaft einen Holzeingriffabschnitt und einen Betoneinbettungsabschnitt aufweist. Der Betoneinbettungsabschnitt ist benachbart zu dem Schraubenkopf angeordnet, während der Holzeingriffabschnitt am anderen Ende des Schraubenschafts, d. h. entfernt zu dem Schraubenkopf, angeordnet ist. Der Holzeingriffabschnitt ist mit einem Holzgewinde versehen, so dass er beispielsweise in einen Holzbalken einer Deckenkonstruktion eingeschraubt werden kann.

Der Betoneinbettungsabschnitt weist Querabstützzonen auf, welche sich senkrecht oder im wesentlichen senkrecht zu der Längsachse der Verbundschraube erstrecken. Im wesentlichen senkrecht bedeutet dabei, dass sich die Flächen der Abstützzonen steil zu der Längsachse des Schraubenschafts erstrecken, beispielsweise in einem Winkel zwischen 50 und 90 Grad gegenüber der Schraubenlängsachse.

Der Betoneinbettungsabschnitt der erfindungsgemäßen Verbundeinrichtung weist entlang der Verbundschraubenlängsachse zusätzlich Längsabstützzonen auf, welche sich in Richtung der Verbundschraubenlängsachse erstrecken. Dabei sind die Längsabstützzonen im wesentlichen über der gesamten Länge vorgesehen, wobei dies entweder in Form einer kontinuierlichen Fläche oder durch einzelne unterbrochene Flächen, d. h. diskret, ausgeführt sein kann. Im wesentlichen über der gesamten Länge bedeutet dabei, dass nicht nur an den beiden Enden des Betoneinbettungsabschnittes Längsabstützzonen vorgesehen sind, sondern längs des gesamten Betoneinbettungsabschnittes. Es sind somit zumindest auch außerhalb der axialen Endpunkte des Betoneinbettungsabschnittes Längsabstützzonen vorgesehen, welche sich natürlich auch ausgehend von den axialen Endpunkten des Betoneinbettungsabschnittes in Richtung der axialen Mitte des Betoneinbettungsabschnittes erstrecken können.

Die Ausrichtung der Längsabstützzonen in Richtung der Verbundschraubenlängsachse ist ausreichend, wenn dadurch eine Zentrierfunktion, welche später beschrieben wird, gewährleistet ist.

Gemäß einer ersten Ausführungsform der Erfindung ist der Betoneinbettungsabschnitt zylinderförmig ausgebildet und die Längsabstützzonen werden durch die Mantelfläche des Zylinders gebildet. Gemäß einer zweiten Ausführung der Erfindung weist der Betoneinbettungsabschnitt eine Vielzahl von zylinderförmigen Abschnitten auf, deren Mantelflächen die Längsabstützzonen bilden.

Gemäß einer weiteren Ausführungsform sind am Betoneinbettungsabschnitt des Schraubenschafts einzelne Ringe angeformt, welche insbesondere jeweils denselben Außendurchmesser aufweisen. Diese Ringe stehen radial über die Oberfläche des Schraubenschafts hervor und ihre Mantelflächen bilden die Längsabstützzonen aus. Die Außendurchmesser der Ringe weisen vorteilhaft einen geringeren Außendurchmesser als der Schraubenkopf oder ein an diesem angeformter Bund auf. Somit ist es nicht notwendig, die Ringe durch erhebliche Materialverformung am Schraubenschaft anzupressen, was die Verwendung einer einfacheren und schnelleren Presse, beispielsweise einer Zweistufenpresse, beim Herstellen des Rohlings ermöglicht.

Die Ringe sind insbesondere am Schraubenschaft angewalzt und können zusammen mit dem Gewinde im Holzeingriffabschnitt in einem einzigen Gewindewalzgang aus einem Durchmesser, insbesondere aus einem zylindrischen Rohling, hergestellt werden. Dies bietet einen Vorteil gegenüber der Herstellung bekannter Verbundmittel, da eine besonders einfache und kostengünstige Herstellung möglich ist. Es ist auch eine Herstellung aus einem Rohling mit mehreren Durchmessern, insbesondere mit zwei Durchmessern möglich, was in der Regel jedoch eine aufwendigere Maschinenbearbeitung bzw. den Einsatz komplizierter Maschinen erfordert. Der Schraubenkopf wird vorteilhaft in jedem Fall durch Stauchen hergestellt, um den gewünschten Außendurchmesser zu erhalten.

Ferner ist es auch möglich, die Ringe am Schraubenschaft anzupressen.

Die Ringe am Schraubenschaft im Betoneinbettungsabschnitt können einen Außendurchmesser aufweisen, welcher nur geringförmig größer als der Außendurchmesser des Holzgewindes ist. Im Sinne der Erfindung ist unter geringfügig größer jeder Außendurchmesser zu verstehen, welcher größer ist als der Außendurchmesser des Holzgewindes, und zwar bis zu 20 Prozent größer, vorteilhaft jedoch bis zu 15, 10 oder 5 Prozent größer. Ein Vorteil dieses geringfügig größeren Außendurchmessers der Ringe im Verhältnis zum Außendurchmesser des Holzgewindes ist darin zu sehen, dass die Schrauben beim Zuführen zu Setzgeräten mehr oder weniger geradeaus rollen. Eine Zuführung mittels Schwerkraft und Rollen auf einem Führungsblech, wobei der Kopf praktisch die Funktion eines Spurkranzes eines Rades einnimmt, ist somit möglich. Die Schrauben müssen für die maschinelle Verarbeitung demnach nicht aufwendig magaziniert oder gegurtet werden.

Der Schaftdurchmesser des Betoneinbettungsabschnitts ist insbesondere derart gewählt, dass er zwar hinsichtlich des gewünschten Einsatzbereiches variabel sein kann, aber an der dünnsten Stelle stets größer ist als der Kerndurchmesser des Gewindes im Holzeingriffabschnitt. Dadurch kann sichergestellt werden, dass sich die Verbundschraube im Beton bei der nicht rückbaubaren Ausführung sicher verankert, und beim Einschrauben der Schraube sich das Einschraubmoment stark erhöht, wenn der erste Ring auf das Holz auftritt.

Die Ringe sind vorteilhaft in gleichmäßigen Abständen axial entlang des gesamten Betoneinbettungsabschnitts angeordnet, und der Abstand zwischen zwei benachbart angeordneten Ringen beträgt insbesondere maximal 30 Prozent der axialen Gesamtlänge des Betoneinbettungsabschnitts.

Der Schraubenkopf kann beispielsweise mit einem Innenantrieb ausgebildet sein, wobei sein Außenumfang vorteilhaft zylindrisch ausgeführt ist.

Der Erfinder hat überraschend erkannt, dass bei Verwendung eines Außen- oder Innensechsrundes (auch Torx™) die gesamte Verbundschraube nicht gehärtet bzw. ungehärtet ausgeführt werden kann. Unter Härtung ist dabei jede Art von Abschreckhärtung oder Einsatzhärtung zu verstehen. Der Erfinder hat festgestellt, dass allein durch die Umformarbeit bei der Herstellung der erfindungsgemäßen Verbundeinrichtung für alle kritischen Bereiche eine ausreichende Härte entsteht, um die Verbundschraube ungehärtet einzudrehen. Der Vorteil der Ausführung der ungehärteten Verbundeinrichtung bzw. der ungehärteten Verbundschraube liegt zunächst darin, dass die Herstellungskosten erheblich (beispielsweise um 15 %) vermindert werden. Zudem können die ungehärteten Schrauben galvanisch verzinkt werden, was bei gehärteten Schrauben für den Dauerlasteinsatz nicht möglich ist, da in der gehärteten Zone eine Wasserstoffversprödung auftreten kann, die zum spontanen Bruch der Schraube führt. Schließlich weisen die nicht gehärteten Schrauben eine höhere Duktilität auf, was die Bruchgefahr bei ungewollter Verformung während der Montage oder die Gefahr des Bildens von Oberflächenrissen, welche nicht entdeckt werden, vermindert.

In der rückbäubaren Ausführung wird der Betoneinbettungsabschnitt von einem Hohlrohr umschlossen, dessen Innendurchmesser im wesentlichen dem Außendurchmesser der Längsabstützzonen im Betoneinbettungsabschnitt entspricht. Das Hohlrohr ist vorteilhaft mit einer üblichen Toleranz über den Betoneinbettungsabschnitt gestülpt, so dass die Schraube bzw. der Betoneinbettungsabschnitt drehbar im Hohlrohr angeordnet ist, wobei der Betoneinbettungsabschnitt mit seinen Längsabschnittszonen im wesentlichen innen im Hohlrohr anliegt.

Durch das Hohlrohr wird verhindert, dass sich die Schraube selbst im Beton verankert. Die Ringe in der besonderen Ausführungsform bewirken, dass das Rohr genau konzentrisch zur Schraubenachse auf dem Schaft sitzt, so dass die Schraube auch bei ausgehärtetem Beton ohne Verkanten aus dem Holz herausgeschraubt werden kann.

Der Außendurchmesser der Ringe im Betoneinbettungsabschnitt ist vorteilhaft größer als der Außendurchmesser des Gewindes im Holzeingriffabschnitt. Entsprechend wird auch der Innendurchmesser des Hohlrohres entsprechend größer als der Außendurchmesser des Gewindes im Holzeingriffabschnitt ausfallen. Dadurch wird eine sichere Zentrierung der Schraube beim Rückbau, d. h. beim Ausdrehen der Schraube aus dem Holz, sichergestellt. Anderenfalls könnte in ungünstigen Fällen das Hohlrohr beim Rückbau schief zur Schraubenachse zu liegen kommen und das Ausdrehen der Schraube, insbesondere zu dem Zeitpunkt, wenn das Gewinde in den Holzeingriffabschnitt eintritt, erschwert oder unmöglich gemacht werden.

Unter dem Schraubenkopf und zwischen der Stirnseite des Hohlrohrs, welche dem Schraubenkopf zugewandt ist, kann vorteilhaft eine Unterlegscheibe, beispielsweise eine handelsübliche Scheibe, angeordnet werden, welche trotz des Rohres eine ausreichende Zugverankerung der Schraube im Beton sicherstellt. Bei entsprechend über den äußeren Umfang des Hohlrohres herausragend ausgebildetem Schraubenkopf kann jedoch auf eine solche Unterlegscheibe verzichtet werden.

Ferner kann das Rohr auf seiner Außenseite mit Betonverriegelungselementen, beispielsweise mit einer Verzahnung versehen sein, welche sich im Beton verankert, so dass vorteilhaft die Scheibe - wenn gewünscht - weggelassen werden kann.

Um einen möglichst freien Zugang von außerhalb des Betons zum Schraubenkopf zu ermöglichen, ist gemäß einer vorteilhaften Ausführung der Schraubenkopf von einem Abdeckelement umschlossen, welches sich in Richtung der Längsachse der Verbundschraube erstreckt und axial über den Schraubenkopf hinausragt, so dass die Verbundschraube über den Schraubenkopf hinaus verlängert wird.

Das Abdeckelement ist so lang in Axialrichtung der Schraube ausgeführt, dass es beim Betoniervorgang immer aus der Betonoberfläche hinausragen kann. Dabei kann das Abdeckelement vorteilhaft als Kunststoffrohr oder als Kunststoffkappe ausgebildet sein, welche oben geschlossen ist. Nach dem Betoniervorgang kann der über die Betonoberfläche hinausragende Teil des Abdeckelementes abgetrennt werden. Es ist jedoch auch möglich, gemäß einer besonderen Ausführung, insbesondere nach dem Aushärten des Betons, das Abdeckelement vollständig aus dem Beton herauszuziehen und zu entfernen, so dass ausschließlich eine Öffnung im Beton verbleibt, durch welche auf den Schraubenkopf zugegriffen werden kann.

Selbstverständlich ist es nicht zwingend notwendig, die Abdeckelemente abzutrennen oder zu entfernen, dies bietet jedoch häufig einen Vorteil, wenn auf dem Beton, beispielsweise einer Betondecke, ein weiterer Belag, beispielsweise ein Bodenbelag, montiert oder verlegt werden soll.

Gemäß einer besonderen Ausführung der Erfindung kann das Hohlrohr, in welchem die Längsabstützzonen gelagert sind, mit dem Abdeckelement, welches ebenfalls als Hohlrohr ausgebildet ist und den Schraubenkopf umschließt, einteilig ausgebildet sein. Im Ergebnis sind beide Hohlrohre zusammen als ein gestuftes Hohlrohr ausgebildet und die Zugverankerung im Beton wird dadurch erreicht, dass der Schraubenkopf mit seiner Unterseite auf der Stufe in diesem Hohlrohr aufliegt. Bei dieser Ausführung ist es vorteilhaft, wenn entsprechend zumindest der Abschnitt des Hohlrohres um den Betoneinbettungsabschnitt des Schraubenschafts herum mit Betonverriegelungselementen, insbesondere einer Verzahnung, versehen ist.

Das erfindungsgemäße Verfahren zum Herstellen einer rückbaubaren Holz-Beton-Verbindung mit einer erfindungsgemäßen Verbundeinrichtung zeichnet sich durch die folgenden Schritte aus:

Zunächst werden eine oder mehrere Verbundeinrichtungen mit ihrem Holzgewinde in ein Holz oder mehrere Hölzer, insbesondere Holzbalken, eingeschraubt. Dabei können die Hohlrohre gleichzeitig, vorher oder nachher über den Betoneinbettungsabschnitt der Verbundschraube gestülpt werden. Anschließend wird Beton derart auf das Holz oder gegebenenfalls auf eine Zwischenschicht auf dem Holz, beispielsweise eine Bretterlage/Holzschalung und/oder Folie, aufgegossen, dass die Abdeckelemente stets über die Betonoberfläche hinausragen und somit eine verbindende Öffnung in dem Beton schaffen, durch welche auch nach dem Aushärten des Betons auf die Schraubenköpfe zugegriffen werden kann.

Anschließend können, wie dargelegt, die Abdeckelemente abgeschnitten oder entfernt werden.

Gemäß des Verfahrens zum Rückbauen einer derart hergestellten Holz-Beton-Verbindung wird auf die Schraubenköpfe durch die entsprechenden in der Betonoberfläche gebildeten Öffnungen antreibend zugegriffen, so dass die Verbundschrauben aus dem Holz herausgeschraubt werden. Anschließend wird der Beton entfernt. Dies kann beispielsweise durch Zerschneiden, insbesondere mit einer Diamantsäge, erfolgen.

Die Erfindung soll nachfolgend durch Ausführungsbeispiele anhand der Figuren erläutert werden.

Es zeigen:
- Figur 1: eine Ausführung einer erfindungsgemäßen Verbundeinrichtung für eine nicht rückbaubare Holz-Beton-Verbindung;
- Figur 2: eine erfindungsgemäße Verbundeinrichtung für eine rückbaubare Holz-Beton-Verbindung;
- Figur 3: eine erfindungsgemäße Verbundeinrichtung beim Lösen der Holz-Beton-Verbindung;
- Figur 4: eine vorteilhafte Ausgestaltung des Gewindes im Holzeingriffabschnitt;
- Figur 5: eine Holz-Beton-Verbindung mit einer Vielzahl von erfindungsgemäßen Verbundeinrichtungen;
- Figur 6: einen Ausschnitt aus der Figur 5 in vergrößerter Darstellung.

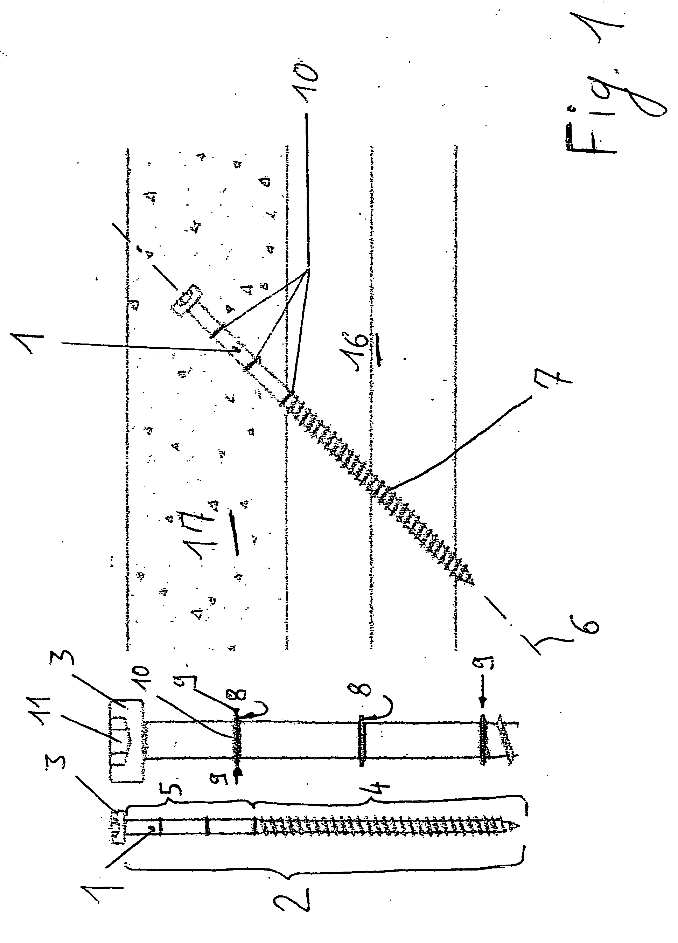

In der Figur 1 erkennt man eine nicht oder nur mit großem Aufwand rückbaubare Verbundeinrichtung mit einer Verbundschraube 1 in einer Holz-Beton-Verbindung. Ferner ist die Verbundschraube 1 nochmals als Einzelteil dargestellt und der Betoneinbettungsabschnitt 5 derselben in einem vergrößerten Ausschnitt gezeigt.

Die Verbundschraube 1 weist einen Schraubenschaft 2 auf, welcher unterteilt ist in einen Holzeingriffabschnitt 4 mit einem Holzgewinde 7 und in einen Betoneinbettungsabschnitt 5 mit angeformten Ringen 10. Der Holzeingriffabschnitt 4 mit dem Holzgewinde 7 dient dem vollständigen Einschrauben in ein Holzelement, beispielsweise einen Holzbalken 16. Vorzugsweise ist dabei die Längsachse 6 der Verbundschraube 1 schräg gestellt, d. h. sowohl gegenüber der Horizontalen als auch gegenüber der Vertikalen geneigt.

Wie man sieht, ragt der Betoneinbettungsabschnitt 5 vollständig aus dem Holzbalken 16 heraus und ist seinerseits durch eine Betonschicht 17 umschlossen. Zur mechanischen Sicherung des Betoneinbettungsabschnitts 5 in der Betonschicht 17 dient einerseits der Schraubenkopf 3 und andererseits die Ringe 10, vorliegend drei an der Anzahl, so dass der Abstand zwischen den einzelnen Ringen jeweils 30 Prozent der axialen Länge des Betoneinbettungsabschnitts 5 beträgt.

Maßgeblich zum Aufbringen der notwendigen Verankerungsspannkraft zwischen Verbundschraube 1 und Betonschicht 17 sind die Querabstützzonen 8, welche im gezeigten Beispiel durch die zur Längsachse 6 senkrecht stehenden Flächen der Ringe 10 ausgebildet sind. In vielen Fällen reicht auch die Querabstützzone aus, welche allein durch den Schraubenkopf ausgebildet wird. Insbesondere bei einer Verankerung in Leichtbeton sind jedoch zusätzlich Querabstützzonen vorteilhaft oder mitunter sogar notwendig, um die notwendige Verspannkraft zu erreichen.

Ferner erkennt man die Längsabstützzonen 9, welche durch die äußeren Umfangsflächen der Ringe 10 ausgebildet werden.

Der Schraubekopf 3 weist stirnseitig einen Innenantrieb 11 auf, zum Beispiel einen Innensechskant- oder einen Innensechsrund (Torx). Im übrigen ist der Schraubenkopf 3 vollständig zylinderförmig bzw. als Vollzylinder ausgeführt.

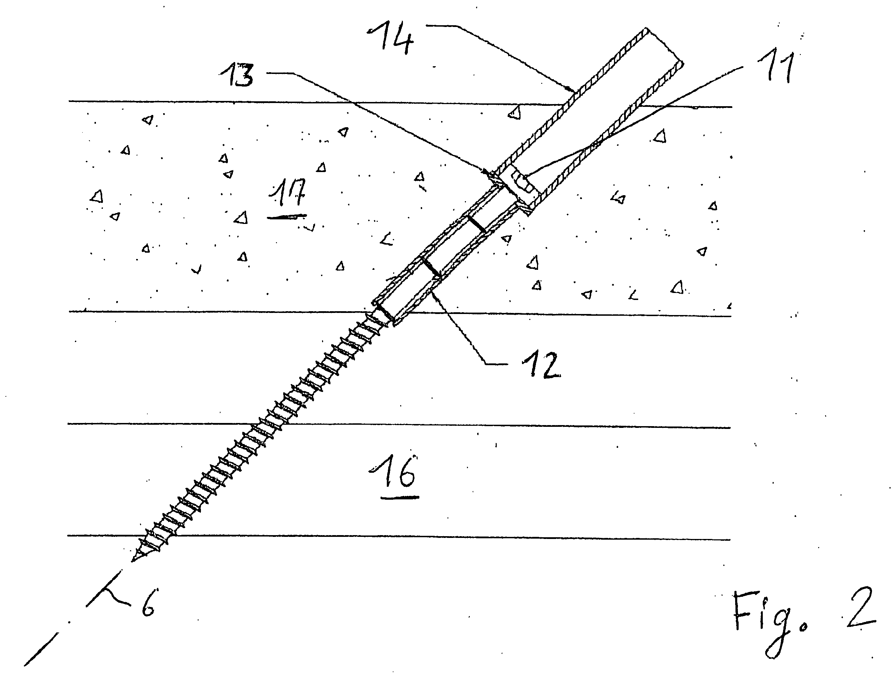

In der Figur 2 erkennt man dieselbe Verbundschraube 1, jedoch diesmal in einer rückbaubaren Holz-Beton-Verbindung. Um die Rückbaubarkeit leicht zu ermöglichen, ist über den Betoneinbettungsabschnitt 5 ein Hohlrohr 12 gestülpt, welches den gesamten Betoneinbettungsabschnitt 5 bis über den untersten Ring 10 umschließt. Dadurch wird verhindert, dass sich die Schraube selbst im Beton verankert. Die Ringe 10 sorgen dafür, dass das Hohlrohr 12 genau konzentrisch zur Schraubenachse 6 auf dem Schaft 2 bzw. auf den Längsabstützzonen 9 der einzelnen Ringe 10 sitzt. Unter den zylindrischen Kopf 3 der Schraube ist eine handelsübliche Scheibe, Unterlegscheibe 13, gelegt, welche die Zugverankerung der Verbundschraube 1 in der Betonschicht 17 sicherstellt.

Damit auch der Schraubenkopf 3 nicht im Beton verankert ist, ist er von einem Abdeckelement 14 umschlossen. Das Abdeckelement 14 ist im vorliegenden Beispiel als Kunststoffrohr ausgeführt, welches die Schraubenachse 6 nach oben derart verlängert, dass das Abdeckelement 14 beim Betoniervorgang immer aus der Betonoberfläche hinausragt. Als Variante kann beispielsweise auch eine Kunststoffkappe verwendet werden, also ein Kunststoffrohr, welches oben geschlossen ist.

Nach dem Betoniervorgang kann das über die Betonoberfläche hinausragende Rohrteil abgeschnitten werden. Dadurch kann ein Bodenbelag nach Wunsch problemlos verlegt werden.

Durch Vorsehen des Abdeckelements 14 wird in der Betonschicht 17 eine zylindrische Öffnung erzielt, durch welche leicht auf den Innenantrieb 11 des Schraubenkopfes 3 zugegriffen werden kann.

Um ein leichtes Abschneiden des Abdeckelementes 14 an der Betonoberfläche zu ermöglichen und um einen kostengünstigen Werkstoff verwenden zu können, hat sich Kunststoff als vorteilhaft erwiesen. Es sind jedoch auch andere Materialien denkbar, beispielsweise Metall, insbesondere Kupfer oder eine Kupferlegierung.

Aufgrund der notwendigen Festigkeit zum Zentrieren der Verbundschraube 1 im Hohlrohr 12 hat sich als Werkstoff für das Hohlrohr 12 Metall als besonders günstig erwiesen. Hierbei kommen besonders nicht rostende Metalle in Betracht, um ein Anbacken bzw. Anrosten der Schraube bzw. der Längsabstützzonen 9 im Hohlrohr 12 zu vermeiden.

Der Schraubenkopf 3 ist an seinem oberen Ende vorteilhaft abgerundet, um besonders leicht beim Rückdrehen im Abdeckelement 14 zu gleiten bzw. zu rotieren.

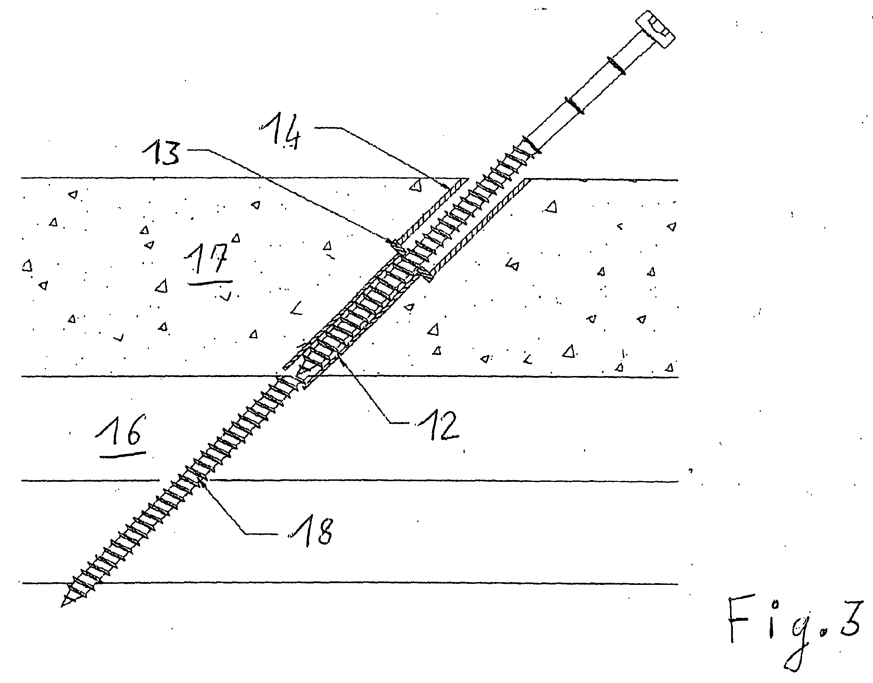

In der Figur 3 wird das leicht ausführbare Rückbauverfahren deutlich. Wenn beispielsweise die Betonplatte bzw. Betonschicht 17 rückgebaut werden soll, so kann - gegebenenfalls nach Entfernen eines darauf montierten Bodenbelags - die Verbundschraube 1 mit einem Drehwerkzeug, welches durch das Abdeckelement 14 axial eingeführt wird, mittels einem Eingriff im Innenantrieb 11 zurück und aus dem Holz, beispielsweise dem Holzbalken 16, herausgedreht werden. Damit ist die mechanische Verbindung zwischen dem Holzbalken 16 und der Betonschicht 17 gelöst. Im Holzbalken 16 verbleibt lediglich eine mäßige Schädigung, nämlich das Einschraubloch mit entsprechendem Gegengewinde 18.

Die Betonschicht 17 kann anschließend beispielsweise mit einer Diamantsäge zerschnitten und entfernt werden.

Beim Rückbauvorgang wird nochmals der Vorteil der auf dem Schraubenschaft 2 aufgewalzten Ringe deutlich. Dadurch, dass das nun im Beton fest verankerte Hohlrohr 12 in der Schraubenachse 6 zentriert ist, wird verhindert, dass sich die Gewindegänge des Holzgewindes 7 der Verbundschraube 1 beim Zurückschrauben am unteren Ende des Hohlrohres 12 festsetzen.

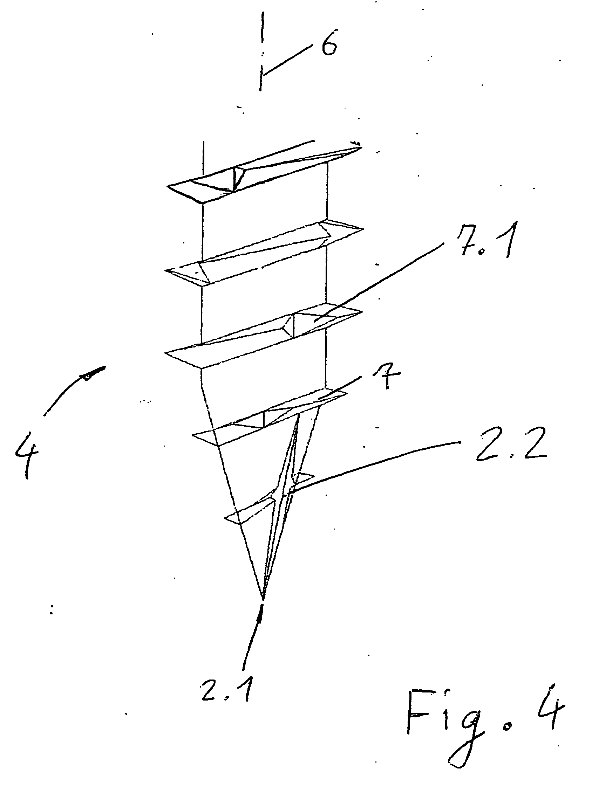

Die Figur 4 zeigt eine Weiterentwicklung der Erfindung mit einem besonders gestalteten Holzgewinde 7 im Holzeingriffabschnitt 4. Dabei ist schematisch nur der untere Bereich der Verbundeinrichtung, d. h. der Bereich von der Spitze der Verbundschraube 1 bis in den Holzeingriffabschnitt 4, dargestellt.

Gemäß einer ersten Maßnahme kann das Holzgewinde 7 als asymmetrisches Gewinde ausgeführt sein, d. h. der dem Schraubenkopf 3 zugewandte Flankenwinkel des Holzgewindes 7 ist kleiner als der dem Schraubenkopf 3 abgewandte Flankenwinkel. Dadurch wird das notwendige Eindrehmoment zum Eindrehen der Verbundschraube 1 in das Holz verringert.

Gemäß einer zweiten Maßnahme ist das Holzgewinde 7 über einen Teilbereich der Gewindelänge oder über der gesamten Gewindelänge mit Nuten versehen, welche das Gewinde kurz unterbrechen. Wie man in der Figur 4 erkennt, sind diese Nuten 7.1 im vorliegenden Fall als V-förmige Nuten, welche in Längsrichtung der Längsachse 6 der Verbundschraube 1 verlaufen, ausgeführt. Auch hierdurch kann das notwendige Eindrehmoment wesentlich vermindert werden.

Durch die beiden genannten Maßnahmen, welche jeweils alleine oder auch gemeinsam ausgeführt werden können, können Schrauben mit vergleichsweise größerem Durchmesser eingesetzt werden, welche normalerweise - ohne die gezeigten Maßnahmen - aufgrund des erforderlichen Eindrehmomentes den Einsatz schwerer Eindrehgeräte notwendig machen. Durch die gezeigten Maßnahmen können solche Schrauben mit größerem Durchmesser jedoch ohne solche schweren Eindrehgeräte eingeschraubt werden. Durch Verwendung von Schrauben mit vergleichsweise größerem Durchmesser kann die Anzahl der Verbundelemente pro Flächeneinheit der Holz-Beton-Verbindung vermindert werden und damit der Arbeitsaufwand verringert werden.

Gemäß einer weiteren vorteilhaften Maßnahme ist die Spitze 2.1 der Verbundschraube 1 bzw. des Schraubenschafts, d. h. das dem Schraubenkopf 3 entfernt liegende axial liegende Ende des Schraubenschafts 2, mit einer Nut 2.2 versehen. Diese Nut ist vorteilhaft mit dem Holzgewinde 7 bzw. insbesondere mit den Ringen 10 in einem Walzgang aufgewalzt. Vorteilhaft verläuft die Nut 2.2 in Richtung der Längsachse 6 der Verbundschraube 1 oder im wesentlichen in Richtung dieser Längsachse 6. Die Nut verringert die Gefahr, dass das Holz längs seiner Fasern beim Eindrehen der Verbundschraube 1 aufgespaltet wird. Somit ist es möglich, die einzelnen Schrauben näher aneinander anzuordnen und insbesondere auch mit einem geringeren Abstand vom Rand des Holzes. Dadurch können größere Verbundkräfte übertragen werden.

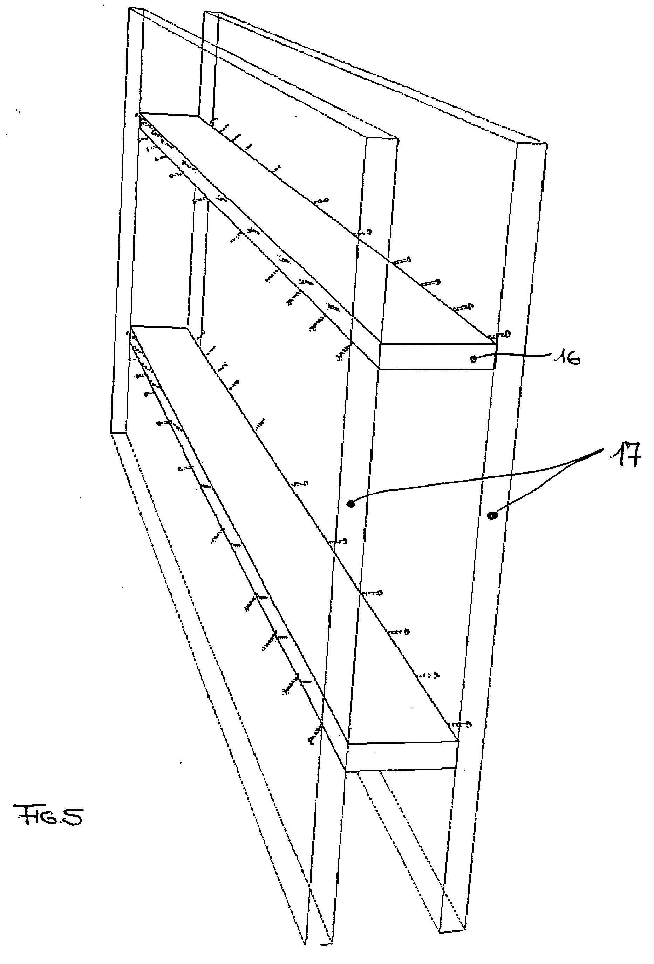

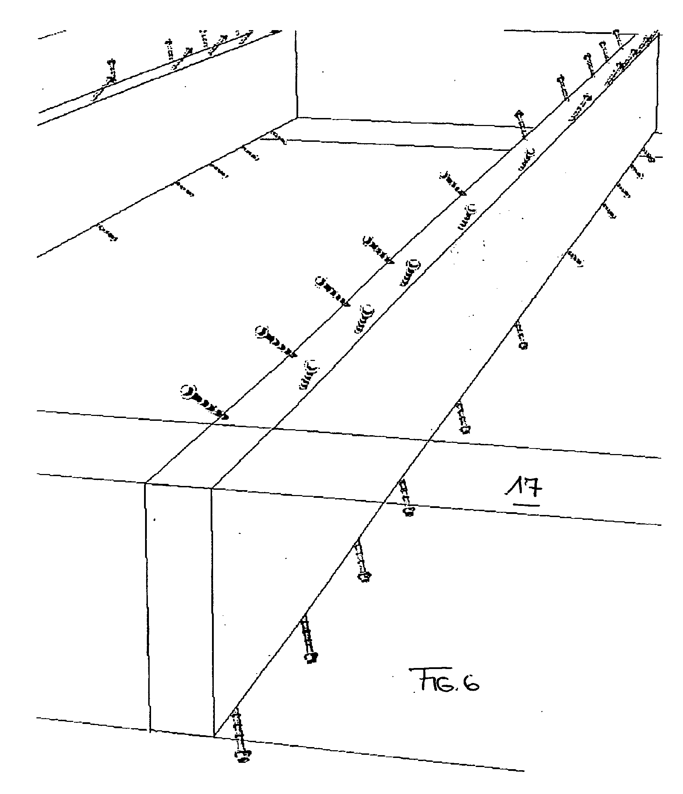

In den Figuren 5 und 6 ist eine vorteilhafte, erfindungsgemäß gestaltete Holz-Beton-Verbindung dargestellt. Wie man sieht, sind die beiden Betonschichten 17 durch eine Vielzahl von Verbundeinrichtungen am Holzbalken 16 befestigt. Dabei sind die Verbundschrauben gegenüber einer Senkrechten auf dem Holzbalken 16, insbesondere gegenüber einer senkrechten Ebene durch die Längsachse des Holzbalkens, geneigt eingedreht. Insbesondere bei der gezeigten Ausführung mit einer Vielzahl von entgegengesetzt zueinander geneigt eingedrehten Verbundschrauben auf derselben Oberfläche des Balkens kann eine besonders hohe Quersteifigkeit erreicht werden.

Wenn, wie in den Figuren 5 und 6 dargestellt, eine zweischalige Holz-Beton-Verbindung ausgeführt wird, wobei die Verbundschrauben auf zwei entgegengesetzten Seiten der Balken 16 eingeschraubt werden und zugleich auf jeder Seite wenigstens zwei Gruppe von Verbundschrauben vorgesehen sind, die entgegengesetzt geneigt zueinander schräg in die Oberfläche der entsprechenden Seite eingedreht sind, kann ein Raumfachwerk aus Betonplatten, Holzbalken und Schrauben erreicht werden, welches eine nicht gekannte Quersteifigkeit aufweist.

Selbstverständlich kann die in den Figuren 5 und 6 gezeigte Holz-Beton-Verbindung auch einschalig ausgeführt werden, d. h. mit einer Betonschicht auf nur einer Seite der Holzbalken 16.

Die durch die Erfindung zur Verfügung gestellte Verbundschraube hat gegenüber den bekannten Schrauben den Vorteil, dass der Rohling auf einer schnellen und einfachen Zweistufenpresse hergestellt werden kann, da die Durchmesser des Rohlings vom Kopf zur Spitze konstant abnehmend sind. Die Herstellung des Rohlings ist wesentlich einfacher als bei den Verbundschrauben im Stand der Technik, insbesondere der aus der EP 0 432 484 bekannten Schraube. Ein weiterer Vorteil der erfindungsgemäßen Verbundschraube liegt darin, dass die Ringe am Verankerungsschaft aus demselben Rohlingdurchmesser und damit in einem Walzgang gewalzt werden können. Die Form und der Abstand der Ringe sind bevorzugt so gewählt, dass die Materialbilanz stimmt und die Verfolgung keine übermäßigen Kräfte und damit Verschleiß des Werkzeugs erfordert und die Materialverformung nach den Materialgesetzen des Strahls möglich ist. Dies ermöglicht eine besonders einfache Herstellbarkeit der erfindungsgemäßen Verbundschraube.

### Bezugszeichenliste

- 1: Verbundschraube
- 2: Schraubenschaft
- 3: Schraubenkopf
- 4: Holzeingriffabschnitt
- 5: Betoneinbettungsabschnitt
- 6: Längsachse
- 7: Holzgewinde
- 8: Querabstützzone
- 9: Längsabstützzone
- 10: Ring
- 11: Innenantrieb
- 12: Hohlrohr
- 13: Unterlegscheibe
- 14: Abdeckelement
- 16: Holzbalken
- 17: Betonschicht

## Patentansprüche

1. Verbundeinrichtung für eine Holz-Beton-Verbindung, umfassend;
1.1 eine Verbundschraube (1), die einen Schraubenschaft (2) und einen Schraubenkopf (3) aufweist;
1.2 der Schraubenschaft (2) weist einen Holzeingriffabschnitt (4) und einen Betoneinbettungsabschnitt (5) auf, wobei der Betoneinbettungsabschnitt (5) in Richtung der Längsachse (6) der Verbundschraube (1) benachbart zu dem Schraubenkopf (3) angeordnet ist und der Holzeingriffabschnitt (4) in Richtung der Längsachse (6) der Verbundschraube (1) entfernt zu dem Schraubenkopf (3) angeordnet ist;
1.3 der Holzeingriffabschnitt (4) ist mit einem Holzgewinde (7) versehen;
1.4 der Betoneinbettungsabschnitt (5) und/oder der Schraubenkopf (3) weist/weisen eine oder mehrere Querabstützzonen (8) auf, die sich senkrecht oder im Wesentlichen senkrecht zu der Verbundschraubenlängsachse (6) erstrecken:
1.5 der Betoneinbettungsabschnitt (5) weist entlang der Verbundschraubenlängsachse (6) im wesentlichen über seiner gesamten Länge kontinuierliche oder diskrete Längsabstützzonen (9) auf, welche sich im wesentlichen oder vollständig in Richtung der Verbundschraubenlängsachse (6) erstrecken;
**gekennzeichnet durch** folgende Merkmale:
1.6 der minimale Durchmesser im Betoneinbettungsabschnitt (5) ist mindestens so groß wie der minimale Durchmesser im Holzeingriffabschnitt (4), wobei insbesondere der Schaftdurchmesser im Betoneinbettungsabschnitt (5) größer oder gleich dem Kerndurchmesser des Holzgewindes (7) des Holzeingriffabschnitts (4) ist und insbesondere die Durchmesser des Betoneinbettungsabschnitts (5) und des Holzeingriffabschnitts (4) zusammen in einem Walzgang aus vorher einem Durchmesser ausgebildet sind.

2. Verbundeinrichtung für eine Holz-Beton-Verbindung, umfassend:
2.1 eine Verbundschraube (1), die einen Schraubenschaft (2) und einen Schraubenkopf (3) aufweist:
2.2 der Schraubenschaft (2) weist einen Holzeingriffabschnitt (4) und einen Betoneinbettungsabschnitt (5) auf, wobei der Betoneinbettungsabschnitt (5) in Richtung der Längsachse (6) der Verbundschraube (1) benachbart zu dem Schraubenkopf (3) angeordnet ist und der Holzeingriffabschnitt (4) in Richtung der Längsachse (6) der Verbundschraube (1) entfernt zu dem Schraubenkopf (3) angeordnet ist;
2.3 der Holzeingriffabschnift (4) ist mit einem Holzgewinde (7) versehen;
2.4 der Betoneinbettungsabschnitt (5) und/oder der Schraubenkopf (3) weist/weisen eine oder mehrere Querabstützzonen (8) auf, die sich senkrecht oder im Wesentlichen senkrecht zu der Verbundschraubenlängsachse (6) erstrecken;
2.5 der Betoneinbettungsabschnitt (5) weist entlang der Verbundschraubenlängsachse (6) im wesentlichen über seiner gesamten Länge kontinuierliche oder diskrete Längsabstützzonen (9) auf, welche sich Im wesentlichen oder vollständig in Richtung der Verbundschraubenlängsachse (6) erstrecken;
**gekennzeichnet durch** folgende Merkmale:
2.6. der Betoneinbettungsabschnitt (5) ist von einem Hohlrohr (12), dessen Innendurchmesser im Wesentlichen dem Außendurchmesser der Längsabstützzonen (9) entspricht, umschlossen, so dass der Betoneinbettungsabschnitt (5) mit seinen Längsabstützzonen (9) drehbar im Hohlrohr (12) anliegt.

3. Verbundeinrichtung gemäß Anspruch1 oder 2, **dadurch gekennzeichnet, dass** der Betoneinbettungsabschnitt (5) zylinderförmig oder abschnittsweise zylinderförmig ausgebildet ist und die Längsabstützzonen (9) durch die Mantelfläche des Zylinders beziehungsweise der Zylinderabschnitte gebildet werden.

4. Verbundeinrichtung gemäß Anspruch 1 oder 2, **dadurch gekennzeichnet, dass** der Betoneinbettungsabschnitt (5) am Schraubenschaft (2) angeformte Ringe (10) mit jeweils demselben Außendurchmesser aufweist, welche radial über die Oberfläche des Schraubenschafts (2) hervorstehen und deren Mantelfläche die Längsabstützzönen (9) ausbilden.

5. Verbundeinrichtung gemäß Anspruch 4, **dadurch gekennzeichnet, dass** die Ringe (10) in im wesentlichen gleichmäßigen Abständen axial entlang des gesamten Betoneinbettungsabschnitts (5) angeordnet sind, wobei der Abstand zwischen zwei benachbart angeordneten Ringen (10) insbesondere maximal 30 Prozent der Axiallänge des Betoneinbettungsabschnitts (5) beträgt.

6. Verbundeinrichtung gemäß einem der Ansprüche 4 oder 5, **dadurch gekennzeichnet, dass** die Ringe (10) einen kleineren Außendurchmesser als der Schraubenkopf (3) oder ein an diesem angeformter Bund aufweisen, und insbesondere einen größeren Außendurchmesser als das Holzgewinde (7) aufweisen, insbesondere einen bis zu 10 Prozent größeren Außendurchmesser als das Holzgewinde (7).

7. Verbundeinrichtung gemäß einem der Ansprüche 1 bis 6, **dadurch gekennzeichnet, dass** der Schraubenkopf (3) zylinderförmig und mit einem Innenantrieb (11) ausgebildet ist.

8. Verbundeinrichtung gemäß einem der Ansprüchen 1 bis 7, **dadurch gekennzeichnet, dass** Verbundschraube (1) ungehärtet Ist.

9. Verbundeinrichtung gemäß Anspruch 2, **dadurch gekennzeichnet, dass** der Schraubenkopf (3) radial über den Außendurchmesser des Hohlrohres (12) herausragt und insbesondere zwischen dem Schraubenkopf (3) und der Stimseite des Hohlrohres (12), welche dem Schraubenkopf (3) zugewandt ist, eine Unterlegscheibe (13) angeordnet ist.

10. Verbundeinrichtung gemäß einem der Ansprüche 2 oder 8, **dadurch gekennzeichnet, dass** der Schraubenkopf (3) von einem sich in Richtung der Längsachse (6) erstreckenden, die Verbundschraube (1) über den Schraubenkopf (3) hinaus verlängernden Abdeckelement (14) umschlossen ist.

11. Verbundeinrichtung gemäß Anspruch 10, **dadurch gekennzeichnet, dass** das Abdeckelement (14) als Kunststoffrohr oder als zylindrische Kunststoffkappe ausgeführt ist .

12. Verbundeinrichtung gemäß der Ansprüche 2 und 10, **dadurch gekennzeichnet, dass** das Abdeckelement (14) als Hohlrohr ausgebildet ist, dessen Innendurchmesser größer ist als der Außendurchmesser des den Betoneinbettungsabschnitt (5) umschließenden Hohlrohres (12).

13. Verbundeinrichtung gemäß Anspruch 12, **dadurch gekennzeichnet, dass** das Abdeckelement (14) und das Hohlrohr (12) einteilig als gestuftes zylindrisches Hohlrohr ausgebildet sind.

14. Verbundeinrichtung gemäß einem der Ansprüche 2 oder 9 bis 14, **dadurch gekennzeichnet, dass** das Hohlrohr (12) auf seiner Außenseite Betonverriegelungselemente, insbesondere eine Verzahnung, aufweist.

15. Verfahren zum Herstellen einer rückbaubaren Holz-Beton-Verbindung mit den folgenden Schritten:
15.1 eine oder mehrere Verbundeinrichtungen gemäß der Ansprüche 1 bis 15 werden mit dem Holzgewinde (7) in ein Holz eingeschraubt;
15.2 das oder die Hohlrohre (12) werden über den Betoneinbettungsabschnitt (5) einer jeden Verbundeinrichtung (1) gestülpt, und das oder die Abdeckelemente (14) werden aufgebracht;
15,3 Beton wird derart zumindest mittelbar auf das Holz gegossen, dass das oder die Abdeckelemente (14) über die Betonoberfläche hinausragen, so dass sie eine verbindende Öffnung des oder der Schraubenköpfe (3) im Beton zur Umgebung frei halten.

16. Verfahren gemäß Anspruch 15, **dadurch gekennzeichnet, dass** die Abdeckelemente (14) nach dem Betonieren entlang der Oberfläche des Betons abgeschnitten oder herausgezogen werden.

17. Verfahren zum Rückbauen einer gemäß einem der Ansprüche 15 oder 18 hergestellten Holz-Beton-Verbindung mit den folgenden Schritten:
17.1 die eine oder mehreren Verbundeinrichtungen werden mit ihrem Holzgewinde (7) aus dem Holz herausgeschraubt, wobei der oder die Schraubenköpfe (3) durch die Öffnungen, welche im Beton durch die Abdeckelemente (14) gebildet wurden, angetrieben werden;
17.2 der Beton wird entfernt.

18. Holz-Beton-Verbindung, umfassend eine Vielzahl von Verbundeinrichtungen gemäß einem der Ansprüche 1 bis 14, **dadurch gekennzeichnet, dass** in einer Oberfläche des Holzes zwei Gruppen von Verbundschrauben (1) eingeschraubt sind, welche gegenüber einer Senkrechten auf der Holzeinschraubebene und entgegengesetzt zueinander geneigt sind.

## Claims

1. Connecting device for a timber-concrete-connection, comprising
1.1 a connection screw (1), showing a screw shank (2) and a screw head (3)
1.2 the screw shank (2) shows a timber pressing sector(4) and a concrete embedding sector (5) whereas the concrete embedding sector (5) is situated in the longitudinal axis (6) of the connecting screw (1) neighbouring to the screw heat (3) and the timber pressure sector (4) is situated in the longitudinal axis (6) of the connecting screw (1) remote to the screw head (3) ;
1.3 the timber pressing sector (4) is provided with a timber thread (7);
1.4 the concrete embedding sector (5) and/or the screw head (3) show one or several lateral support zones (8) that extend perpendicularly or essentially particularly to the longitudinal axis of the screw (6);
1.5 the concrete embedding section (5) shows along the longitudinal axis of the connecting screw (6) in essence all over its total length continuously or discretely lateral support zones (9) that extend in essence or completely in in direction of the longitudinal axis of the connecting screw (6) ; **characterized by** the following characteristics:
1.6 the minimum diameter in the concrete embedding sector (5) is at least as big as the minimum diameter of the timber pressing sector (4), whereas essentially the shank diameter in the concrete embedding sector (5) is bigger or equal the core diameter of the timber threads (7) of the timber compression sector (4) and in particular the diameters of the concrete embedding sector (5) and the timber pressing sector (4) are formed together in one rolling cycle, out of a previous single diameter.

2. Connecting device for a timber-concrete-connection, comprising
2.1 a connection screw (1), showing a screw shank (2) and a screw head (3)
2.2 the screw shank (2) shows a timber pressing sector(4) and a concrete embedding sector (5) whereas the concrete embedding sector (5) is situated in the longitudinal axis (6) of the connecting screw (1) neighbouring to the screw heat (3) and the timber pressure sector (4) is situated in the longitudinal axis (6) of the connecting screw (1) remote to the screw head (3) ;
2.3 the timber pressing sector (4) is provided with a timber thread (7);
2.4 the concrete embedding sector (5) and/or the screw head (3) show one or several lateral support zones (8) that extend perpendicularly or essentially particularly to the longitudinal axis of the screw (6);
2.5 the concrete embedding section (5) shows along the longitudinal axis of the connecting screw (6) in essence all over its total length continuously or discretely lateral support zones (9) that extend in essence or completely in in direction of the longitudinal axis of the connecting screw (6) ; **characterized by** the following characteristics:
2.6. the concrete embedding sector (5) is enclosed of a hollow tube (12), whose inner diameter corresponds essentially the outer diameter of the longitudinal support zones (9), so that the concrete embedding sector (5) with its longitudinal support zones (9) sit close and rotatable in the hollow tube (12).

3. Connecting device according to claim 1 or 2, **characterized** thereby, that the concrete embedding sector (5) is shaped cylindrical or partially cylindrical and the longitudinal support zones (9) are formed by the cylindrical surface respectively the by the cylindrical surfaces of the cylindrical sectors.

4. Connecting device according to claim 1 or 2, **characterized** thereby, that the concrete embedding sector (5) show collars 10), cold formed to the screw shank (2) with equal outer diameters each, that protrudes radially over the surface of the screw shank (2) an their surface form the longitudinal support zones.(9).

5. Connecting device according to claim 4, **characterized** thereby, that the collars (10) are situated in essence in uniform distances axially along the whole concrete embedding sector (5) whereas the distance between two neighbouring collars (10) is in particular maximally 30 percent of the axial length of the concrete embedding sector (5).

6. Connecting device according to one of the claims 4 or 5 **characterized** thereby, that the collars (10) have a smaller exterior diameter than the screw head (3) or a collar formed to it, and in particular a higher exterior diameter than the timber thread (7) in particular up to 10 percent higher exterior diameter than the timber thread (7).

7. Connecting device according to one of the claims 1 to 6 **characterized** thereby, that the screw head (3) is formed cylindrically and equipped with an internal drive (11).

8. Connecting device according to one of the claims 1 to 7 **characterized** thereby, that connecting device (1) is not thermally hardened

9. Connecting device according to one of claims 2 **characterized** thereby that the screw head (3) protrudes radially above the external diameter of the hollow tube (12) and in particular a washer (13) is arranged between the screw head (3) and the front face of the hollow tube (12), that faces the screw head (3).

10. Connecting device according to one of the claims 2 to 9 **characterized** thereby, that the screw head (3) is enclosed by a covering cap (14), that extends in the direction of the longitudinal axis (6) lengthening the connecting screw (1) over the screw head (3).

11. Connecting device according to claim 10, **characterized** thereby, that the covering cap (14) is carried out as a plastic tube or a cylindrical plastic cap.

12. Connecting device according to one of the claims 2 to 10 **characterized** thereby, that the covering cap (14) is carried out as a hollow tube, whose internal diameter is larger than than the external diameter of the hollow tube (12), that encloses the concrete embedding sector (5).

13. Connecting device according to claim 12, **characterized** thereby, that the cover cap (14) and the hollow tube (12) are carried out as one stepped cylindrical hollow tube.

14. Connecting device according to one of the claims 2 or 9 to 10 **characterized** thereby, that the hollow tube (12) shows outside concrete interlocking elements, especially a denticulation.

15. Procedure to produce a timber-concrete connection that may be retreating worked in the following steps:
15.1 one or more connecting devices are screwed in a timber piece with the timber screw according to one of the claims 1 to 15,
15.2 the hollow tube or the hollow tubes (12) are slipped over the concrete embedding sector (5) of each of the connecting devices (1) and the cover cap or the cover caps (14) are mounted;
15.3 Concrete is poured at least indirectly on the timber beam in such a way, that the cover element or the cover elements (14) stand out from the concrete surface, such that a connecting opening of the screw head or the screw heads in the concrete is kept clear to the surrounding environment.

16. Procedure according to claim 15, **characterized** thereby, that the cover elements (14) are cut along the surface of the concrete or pulled out of the concrete after pouring the concrete.

17. Procedure for retreating work a timber-concrete connection erected according to one of the claims 15 oder 16 in the following steps:
17.1 the one ore more connecting devices are screwed out the timber part with their timber thread (7), in doing so the screw heads (3) are driven through the openings that were formed by the covering devices (14) ;
17.2 the concrete is removed.

18. Timber-concrete connections, comprising a multitude of connecting devices according to one of the claims 1 to 14, **characterized** thereby, that in one surface of the timber part two groups of connecting screws (1) are screwed in, that are inclined towards a perpendicular to the timber plane in which the screws are screwed in, one group inclined opposite to the other.

## Revendications

1. Dispositif mixte pour une liaison bois-béton, comprenant :
1.1 une vis mixte (1), qui présente une tige de vis (2) et une tête de vis (3) ;
1.2 la tige de vis (2) présente un segment destiné à la prise dans le bois (4) et un segment destiné à l'inclusion dans le béton (5), le segment destiné à l'inclusion dans le béton (5) étant contigu à la tête de vis (3) dans le sens de l'axe longitudinal (6) de la vis mixte (1), et le segment destiné à la prise dans le bois (4) étant éloigné de la tête de vis (3) dans le sens de l'axe longitudinal (6) de la vis mixte (1) ;
1.3 le segment destiné à la prise dans le bois (4) est muni d'un filetage à bois (7) ;
1.4 le segment destiné à l'inclusion dans le béton (5) et/ou la tête de vis (3) présente/présentent une ou plusieurs zones de support transversales (8), qui s'étendent perpendiculairement ou essentiellement perpendiculairement à l'axe longitudinal (6) de la vis mixte ;
1.5 le segment destiné à l'inclusion dans le béton (5) présente essentiellement sur toute sa longueur, le long de l'axe longitudinal (6) de la vis mixte, des zones de support longitudinales (9) continues ou discontinues, qui s'étendent essentiellement ou totalement dans le sens de l'axe longitudinal (6) de la vis mixte ;
**caractérisé par** les caractéristiques suivantes :
1.6 le diamètre minimal dans le segment destiné à l'inclusion dans le béton (5) est au moins aussi grand que le diamètre minimal dans le segment destiné à la prise dans le bois (4), le diamètre de la tige dans le segment destiné à l'inclusion dans le béton (5) étant notamment supérieur ou égal au diamètre du fond du filetage à bois (7) du segment destiné à la prise dans le bois (4), et les diamètres du segment destiné à l'inclusion dans le béton (5) et du segment destiné à la prise dans le bois (4) étant notamment réalisés ensemble au cours d'un seul cycle de roulage à partir d'auparavant un seul diamètre.

2. Dispositif mixte pour une liaison bois-béton, comprenant :
2.1 une vis mixte (1), qui présente une tige de vis (2) et une tête de vis (3) ;
2.2 la tige de vis (2) présente un segment destiné à la prise dans le bois (4) et un segment destiné à l'inclusion dans le béton (5), le segment destiné à l'inclusion dans le béton (5) étant contigu à la tête de vis (3) dans le sens de l'axe longitudinal (6) de la vis mixte (1), et le segment destiné à la prise dans le bois (4) étant éloigné de la tête de vis (3) dans le sens de l'axe longitudinal (6) de la vis mixte (1) ;
2.3 le segment destiné à la prise dans le bois (4) est muni d'un filetage à bois (7) ;
2.4 le segment destiné à l'inclusion dans le béton (5) et/ou la tête de vis (3) présente/présentent une ou plusieurs zones de support transversales (8), qui s'étendent perpendiculairement ou essentiellement perpendiculairement à l'axe longitudinal (6) de la vis mixte ;
2.5 le segment destiné à l'inclusion dans le béton (5) présente essentiellement sur toute sa longueur, le long de l'axe longitudinal (6) de la vis mixte, des zones de support longitudinales (9) continues ou discontinues, qui s'étendent essentiellement ou totalement dans le sens de l'axe longitudinal (6) de la vis mixte ;
**caractérisé par** les caractéristiques suivantes :
2.6 le segment destiné à l'inclusion dans le béton (5) est entouré d'un tube creux (12), dont le diamètre intérieur correspond essentiellement au diamètre extérieur des zones de support longitudinales (9), de sorte que le segment destiné à l'inclusion dans le béton (5), avec ses zones de support longitudinales (9), est ajusté rotatif dans le tube creux (12) .

3. Dispositif mixte selon la revendication 1 ou 2, **caractérisé en ce que** le segment destiné à l'inclusion dans le béton (5) est conçu cylindrique ou avec des segments cylindriques, et **en ce que** les zones de support longitudinales (9) sont constituées par la surface latérale du cylindre ou des segments cylindriques.

4. Dispositif mixte selon la revendication 1 ou 2, **caractérisé en ce que** le segment destiné à l'inclusion dans le béton (5) présente des anneaux (10) façonnés sur la tige de vis (2) et présentant chacun le même diamètre extérieur, lesdits anneaux dépassant dans le sens radial au-delà de la surface de la tige de vis (2) et leur surface latérale constituant les zones de support longitudinales (9).

5. Dispositif mixte selon la revendication 4, **caractérisé en ce que** les anneaux (10) sont disposés dans le sens axial à distances essentiellement régulières le long de tout le segment destiné à l'inclusion dans le béton (5), la distance entre deux anneaux (10) voisins l'un de l'autre étant notamment d'au maximum 30% de la longueur axiale du segment destiné à l'inclusion dans le béton (5).

6. Dispositif mixte selon l'une des revendications 4 ou 5, **caractérisé en ce que** les anneaux (10) présentent un diamètre extérieur plus petit que la tête de vis (3) ou qu'une embase façonnée sur cette dernière, et présentent notamment un diamètre extérieur plus grand que le filetage à bois (7), notamment un diamètre extérieur supérieur de jusqu'à 10% au filetage à bois (7).

7. Dispositif mixte selon l'une des revendications 1 à 6, **caractérisé en ce que** la tête de vis (3) est conçue cylindrique et avec un entraînement interne (11).

8. Dispositif mixte selon l'une des revendications 1 à 7, **caractérisé en ce que** la vis mixte (1) est non trempée.

9. Dispositif mixte selon la revendication 2, **caractérisé en ce que** la tête de vis (3) dépasse dans le sens radial au-delà du diamètre extérieur du tube creux (12), et **en ce qu'**une rondelle (13) est notamment disposée entre la tête de vis (3) et la face terminale du tube creux (12) dirigée vers la tête de vis (3).

10. Dispositif mixte selon l'une des revendications 2 ou 9, **caractérisé en ce que** la tête de vis (3) est entourée d'un élément de recouvrement (14) qui s'étend dans le sens de l'axe longitudinal (6) et qui rallonge la vis mixte (1) au-delà de la tête de vis (3) .

11. Dispositif mixte selon la revendication 10, **caractérisé en ce que** l'élément de recouvrement (14) est réalisé comme tube en plastique ou comme capuchon cylindrique en plastique.

12. Dispositif mixte selon les revendications 2 et 10, **caractérisé en ce que** l'élément de recouvrement (14) est conçu comme tube creux présentant un diamètre intérieur plus grand que le diamètre extérieur du tube creux (12) qui entoure le segment destiné à l'inclusion dans le béton (5).

13. Dispositif mixte selon la revendication 12, **caractérisé en ce que** l'élément de recouvrement (14) et le tube creux (12) sont conçus d'une seule pièce comme tube creux cylindrique étagé.

14. Dispositif mixte selon l'une des revendications 2 ou 9 à 14, **caractérisé en ce que** le tube creux (12) présente sur sa face externe des éléments destinés au verrouillage dans le béton, notamment une denture.

15. Procédé pour la réalisation d'une liaison bois-béton démontable, lequel comprend les étapes suivantes :
15.1 on visse dans un bois un ou plusieurs dispositifs mixtes selon les revendications 1 à 15 avec le filetage à bois (7) ;
15.2 on enfonce le ou les tubes creux (12) sur le segment destiné à l'inclusion dans le béton (5) de chaque dispositif mixte (1), et l'on pose le ou les éléments de recouvrement (14).
15.3 on coule du moins indirectement du béton sur le bois de telle manière que le ou les éléments de recouvrement (14) dépassent au-delà de la surface du béton, de sorte qu'ils gardent libre un orifice reliant le milieu ambiant et les têtes de vis (3) qui se trouvent dans le béton.

16. Procédé selon la revendication 15, **caractérisé en ce que** l'on coupe ou l'on retire les éléments de recouvrement (14) le long de la surface du béton après le bétonnage.

17. Procédé pour le démontage d'une liaison bois-béton réalisée selon l'une des revendications 15 ou 16, comprenant les étapes suivantes :
17.1 on dévisse du bois l'unique ou les multiples dispositifs mixtes avec leur filetage à bois (7), en entraînant la ou les têtes de vis (3) par la voie des orifices qui ont été créés dans le béton par les éléments de recouvrement (14) ;
17.2 on enlève le béton.

18. Liaison bois-béton, comprenant une multitude de dispositifs mixtes selon l'une des revendications 1 à 14, **caractérisée en ce que** dans une surface du bois sont vissés deux groupes de vis mixtes (1), qui sont inclinés par rapport à une perpendiculaire au plan de vissage dans le bois et dans le sens contraire l'un de l'autre.
